# NOUVEAU FASCICULE DE BREVET EUROPEEN

(11) **EP 0 858 428 B2**
(45) Date de publication et mention de la décision concernant l'opposition: **09.08.2006**
(45) Mention de la délivrance du brevet: 24.01.2001
(21) Numéro de dépôt: 96937379.4
(22) Date de dépôt: 31.10.1996
(51) Int. Cl.: C01D 5/00, B01D 53/68, B01D 53/50

(54) **PROCEDE DE TRAITEMENT DE FUMEES A BASE D'OXYDES DE SOUFRE**
VERFAHREN ZUR BEHANDLUNG VON RAUCHGASEN AUF BASIS VON SCHWEFELOXIDEN
METHOD FOR PROCESSING FLUE GASES CONTAINING SULPHUR OXIDES

(30) Priorité: 31.10.1995 FR 9512975
(43) Date de publication de la demande: 19.08.1998
(73) Titulaire: Novacarb, 92408 Courbevoie Cédex (FR)
(72) Inventeur: FOURCOT, Fabrice, F-78140 Vélizy (FR); POUXVIEL, Jean-Claude, F-78480 Verneuil-sur-Seine (FR)
(74) Mandataire: Jacobson, Claude
(86) Numéro de dépôt international: PCT/FR1996/001719
(87) Numéro de publication internationale: WO 1997/016376

(56) Documents cités:
- EP-A- 0 015 626
- EP-A- 0 366 182
- FR-A- 1 178 417
- GB-A- 2 106 489
- US-A- 4 385 039
- US-A- 4 767 605
- CHEMICAL ABSTRACTS, vol. 82, no. 18, 5 Mai 1975 Columbus, Ohio, US; abstract no. 115559, Y. TAMOTSU ET AL.: "Desulfurization of flue gas by active soda ash" XP002007308 & NAGOYA KOGYO DAIGAKU GAKUHO, vol. 25, - 1973 pages 395-403,
- CHEMICAL ABSTRACTS, vol. 84, no. 2, 12 Janvier 1976 Columbus, Ohio, US; abstract no. 8708, XP002007309 & JP 50 102 578 A (HITACHI LTD.) 13 Août 1975
- PERRY R.H.; GREEN D.W.: 'Perry's Chemical Engineers, Handbook, 6th ed', 1985, MCGRAW HILL, NEW YORK pages 3 - 97

## Description

La présente invention a pour objet un traitement de fumées comprenant essentiellement des oxydes de soufre, et dans une moindre mesure des métaux considérés comme toxiques ainsi que des acides, de formule HX, dans laquelle X représente un halogène.

De nombreux procédés produisent des fumées contenant des oxydes de soufres, et d'autres polluants organiques ou minéraux, de même que des métaux considérés comme toxiques. C'est plus particulièrement le cas des centrales thermiques et des fours verriers, selon la qualité du combustible et de matières premières employés.

Du fait de la pression croissante exercée en matière de réglementation sur l'environnement concernant les installations émettant de tels rejets, les procédés de traitement des fumées acides connaissent un essor important.

Les traitements classiques de neutralisation à la chaux, que ce soit par voie sèche ou semi-humide, génèrent une quantité importante de déchets solides, composés pour la majeure partie, de gypse pollué par des métaux considérés comme toxiques, comme le plomb, le cadmium, l'aluminium, par exemple.

Le brevet US 4 385 039 décrit le traitement de gaz comprenant des composés du type des SOx, avec un réactif qui peut être régénéré, et choisi parmi le carbonate de sodium activé par traitement thermique, le bicarbonate de sodium, ou le trona, seuls ou en mélange. Les résidus solides issus du traitement des gaz sont solubilisés ensuite au moyen d'une solution alcaline comprenant un composé du bore et de l'ammoniaque. La solution résultante est alors carbonatée de manière à faire précipiter du carbonate et/ou du bicarbonate de sodium, qui sont par la suite, réengagés dans le traitement des gaz. Cependant, ce procédé produit toujours une quantité importante de déchets solides (gypse), pollués par des métaux considérés toxiques et non valorisables. En effet, il existe dans ce procédé une étape de précipitation à la chaux, des sulfates restants dans la solution après séparation des carbonate et/ou bicarbonate précipités.

Etant donnés la composition de ces déchets et le caractère fortement soluble dans l'eau des éléments métalliques polluants, la législation impose leur dépôt en décharge contrôlée, après immobilisation.

Ceci est un inconvénient très important car non seulement de tels traitements sont coûteux mais encore les tonnages de déchets produits sont important en quantité. De plus, il n'y a pas moyen de revaloriser facilement un ou plusieurs produits résultants de tels traitements.

La présente invention a donc pour objectif de proposer un procédé de traitement de fumées comprenant majoritairement des composés du type des SOx, et des métaux considérés comme toxiques, ne présentant pas les inconvénients précités.

Ainsi, le procédé selon l'invention permet de traiter de telles fumées avec un réactif plus efficace que la chaux, donc utilisé en quantités molaires moins élevées, et choisi de telle sorte que les déchets produits lors de la neutralisation de ces gaz soient facilement et économiquement recyclables.

Ces buts et d'autres sont atteints par la présente invention qui concerne un procédé de traitement de fumées comprenant des composés du type des SOx, par voie sèche ou semi-humide, consistant à effectuer les étapes suivantes :
- on traite lesdites fumées avec un réactif choisi parmi le carbonate de sodium, le bicarbonate de sodium et leurs mélanges,
- on dissout sélectivement dans l'eau les sulfates de sodium produits, dans le but de laisser en suspension la majeure partie des métaux considérés comme toxiques
- on sépare les solides restants en suspension dans la solution,
- on cristallise le sulfate de sodium purifié présent dans la solution précitée.

Mais d'autres avantages de la présente invention apparaîtront plus clairement à la lecture de la description et des exemples qui vont suivre.

Comme cela a été mentionné auparavant, le procédé selon l'invention est dirigé sur le traitement de fumées comprenant majoritairement des gaz du type des SOx. Par SOx, on entend les espèces SO₂, SO₃. Les fumées peuvent en outre comprendre les sulfites et/ou des bisuffites.

Les fumées traitées par le procédé selon l'invention comprennent en outre des métaux considérés comme toxiques. Par métaux considérés comme toxiques, on entend des métaux considérés comme toxiques et/ou des métaux polyvalents. Plus particulièrement mais sans intention de se limiter, on peut citer le mercure, cadmium, le plomb, l'arsenic, le sélénium, l'argent, l'étain, l'antimoine, le zinc, l'aluminium, le silicium, le calcium, le titane, le chrome, le manganèse, le fer, le nickel, le cuivre, le molybdène; le bismuth, le vanadium, le cobalt.

Les fumées traitées selon le procédé de l'invention peuvent aussi comprendre, dans une moindre mesure, des composés du type des NOx, des acides de formule HX, dans laquelle X représente un atome d'halogène. Plus particulièrement, l'atome d'halogène est le chlore, ou le fluor.

Les fumées peuvent aussi contenir des polluants organiques, tels que notamment les dioxines ou encore les furannes.

Outre les polluants qui viennent d'être mentionnés, lesdites fumées peuvent aussi comprendre des poussières ou des cendres volantes.

Les fumées sont donc traitées par voie sèche ou semi-humide avec un réactif choisi parmi le carbonate de sodium, le bicarbonate de sodium ou leurs mélanges.

Par voie sèche, on désigne plus particulièrement un traitement dans lequel le réactif est introduit à l'état solide dans les fumées.

Dans le cas où le traitement mis en oeuvre est la voie sèche, on peut distinguer deux types de mise en oeuvre, la première variante est exempte d'eau et la seconde variante est effectuée en présence d'eau.

Selon la première variante de la méthode par voie sèche, on utilise plus particulièrement des réactifs anhydres.

Selon la seconde variante de la méthode par voie sèche, on met en contact les fumées avec un réactif précité, en présence d'eau mais avec une quantité telle que le réactif conserve son aspect de poudre. Le réactif mis en oeuvre peut se trouver sous forme anhydre ou comprenant de l'eau de cristallisation.

L'eau peut être apportée dans le procédé de plusieurs manières. Celle-ci peut notamment être présente intrinsèquement dans le réactif ou bien être apportée extemporanément, avant le traitement des fumées ou bien encore, lors du traitement de ces fumées. Bien entendu, la combinaison de ces possibilités est envisageable.

Dans le cas où le réactif comprend de l'eau de cristallisation, il peut être envisageable de ne pas apporter l'eau extemporanément et d'effectuer le traitement en présence seulement de l'eau de cristallisation du réactif.

Cependant, selon un mode de réalisation préféré de l'invention, on apporte l'eau extemporanément, que le réactif comprenne ou non de l'eau de cristallisation. Dans ce cas, la teneur en eau est comprise entre 2 et 15 % en poids par rapport au réactif.

par voie semi-humide, on définit un procédé dans lequel la réactif est introduit en présence d'eau dans une quantité telle que les produits obtenus après le traitement se trouvent sous une forme solide. Dans ce cas, le réactif est mis en oeuvre sous la forme d'une suspension ou d'une solution.

La teneur en eau nécessaire pour obtenir une solution ou une suspension du réactif peut être déterminée par l'homme du métier en fonction des contraintes technologiques du procédé. Plus particulièrement, cette teneur dépend de la température de traitement des fumées, de la capacité d'évaporation des appareillages et du fait que l'on souhaite obtenir, après ledit traitement, un produit solide.

Dans le cas où le réactif se présente sous forme solide, il peut être préférable d'utiliser un produit de granulométrie fine et contrôlée de façon à améliorer la cinétique du traitement de neutralisation.

A titre indicatif, on préfère utiliser un réactif dont la taille moyenne des particules est inférieure à 50 µm. Selon un mode de réalisation plus particulier, on utilise un réactif dont la granulométrie moyenne est comprise entre 5 et 30 µm. entre 5 et 30 µm.

Si l'on met en oeuvre un réactif de granulométrie supérieure ou de l'ordre de 50 µm, il peut être avantageux d'effectuer préalablement au traitement des fumées, une étape de broyage dudit réactif pour atteindre une granulométrie de l'ordre de 5 à 30 µm. Une telle étape peut être mise en oeuvre par tout moyen classique connu de l'homme du métier.

Les carbonates et bicarbonates présents sur le marché conviennent à la réalisation de la présente invention.

Le carbonate de sodium mis en oeuvre dans le procédé est plus particulièrement du carbonate de sodium léger. Ce dernier peut ou non comprendre de l'eau d'hydratation. A titre d'exemple, le carbonate de sodium anhydre, monohydraté, heptahydraté ou décahydraté conviennent à la réalisation de l'invention, ces composés pouvant être utilisés seuls ou en mélange.

Il est de même envisageable de mettre en oeuvre le procédé selon l'invention avec un réactif comme le sesquicarbonate de sodium, qui correspond à un mélange équimolaire de bicarbonate et de carbonate de sodium comprenant deux molécules d'eau.

Selon une variante préférée de l'invention, on met en oeuvre un réactif choisi parmi le bicarbonate de sodium, ou un mélange bicarbonate de sodium / carbonate de sodium dans lequel la proportion molaire de bicarbonate est supérieure à celle du carbonate de sodium. A titre indicatif, on effectue le traitement avec un réactif comprenant au moins 70 % de bicarbonate de sodium.

Selon une autre variante préférée de l'invention, le réactif mis en oeuvre peut comprendre au moins de l'ammoniac sous forme de sels d'ammonium tels que bicarbonate, carbonate, et/ou carbamate.

Ce réactif peut, en outre, comprendre des sels carbamate et de l'eau.

La teneur en bicarbonate de sodium est avantageusement d'au moins 70 % en poids, de préférence d'au moins 80% en poids, et plus particulièrement comprise entre 80 et 95 % en poids. La quantité de carbonate de sodium présent est avantageusement de moins de 30 % en poids, de préférence de moins de 20%, et plus particulièrement comprise entre 5 et 15 % en poids. L'ammoniac, exprimé sous forme d'ion ammonium, est présent de préférence de moins de 1 % en poids et plus particulièrement compris entre 0,2 et 0,7 % en poids.

La teneur en carbamate d'ammonium est de préférence inférieure à 0,1 % en poids et plus préférentiellement comprise entre 0,01 et 0,06 % en poids. L'eau est présente de préférence en quantité inférieure à 10 % en poids et plus préférentiellement de 1 à 6 % en poids.

Selon une variante particulièrement avantageuse, on peut mettre en oeuvre un mélange comprenant du carbonate et du bicarbonate de sodium, obtenu par un traitement thermique de bicarbonate ammoniacal, à une température variant entre 20 et 150°C, de préférence entre 20 et 130°C, sous une atmosphère contrôlée comprenant éventuellement du dioxyde de carbone et/ou de l'eau.

Le bicarbonate ammoniacal traité thermiquement est le produit intermédiaire obtenu en mettant en oeuvre le procédé de préparation de carbonate de sodium par la technique de la soude à l'ammoniaque, connue aussi sous le nom de "procédé Solvay".

Plus précisément, on appelle bicarbonate ammoniacal aux fins de la présente invention, le produit obtenu après dissolution d'ammoniac gazeux dans une solution aqueuse de chlorure de sodium, de manière à produire une saumure ammoniacale. Celle-ci est ensuite traitée avec un gaz contenant du dioxyde de carbone pour donner des cristaux de bicarbonate ammoniacal.

Le bicarbonate ammoniacal désigne en fait un mélange comprenant principalement du bicarbonate de sodium, du carbonate de sodium, et dans une moindre mesure, de l'ammoniac sous forme de sels d'ammonium tels que le bicarbonate, carbonate, et/ou carbamate, et de l'eau.

A titré indicatif, la composition de ce mélange est la suivante : 70 à 90 % en poids, de bicarbonate de sodium (NaHCO₃), 2 à 20% en poids de carbonate de sodium (Na₂CO₃), 0,2 à 1,0 % en poids d'ammoniac exprimé sous forme d'ion ammonium, 0,3 à 2,0 % en poids de carbamate d'ammonium (NH₄O₂CNH₂), et 5 à 20 % en poids d'eau.

Plus particulièrement, le traitement thermique est effectué en présence d'une atmosphère comprenant de la vapeur d'eau dans une teneur comprise entre 0 et 10 % molaire.

Par ailleurs, le traitement thermique est effectué en présence d'une atmosphère comprenant une teneur en dioxyde de carbone comprise entre 0 et 100% molaire.

Le complément pour atteindre la pression totale souhaitée, est assurée, si nécessaire, et de manière avantageuse par de l'air, ou tout gaz un gaz inerte comme les gaz rares, ou l'azote.

Il est à noter que le traitement thermique du bicarbonate ammoniacal peut être effectué sous toute pression.

Le traitement thermique est de préférence' mis en oeuvre en présence de vapeur d'eau et de dioxyde de carbone.

Le traitement selon l'invention est réalisé de préférence sous un flux gazeux, et sous agitation.

On a constaté que la température de traitement du bicarbonate ammoniacal pouvait être adaptée en fonction de la quantité de vapeur d'eau et de dioxyde de carbone présents.

Ainsi, dans le cas où l'atmosphère est un mélange azote/oxygène ou de l'air, la gamme de température pour le traitement thermique sera de préférence inférieure à 80°C.

Par ailleurs, si le traitement est mis en oeuvre sous un mélange dioxyde de carbone et vapeur d'eau, il est alors envisageable d'effectuer ce dernier à une température proche de 120-130°C, bien que des températures plus faibles restent possibles.

Pour ce qui précède, les valeurs des températures sont exprimées à la pression atmosphérique. L'homme du métier est capable d'adapter les valeurs des températures en fonction de la pression sous laquelle est réalisé le traitement.

Habituellement, la durée de l'opération est d'au plus quelques heures.

La quantité de réactif mis en oeuvre dans le procédé de traitement des fumées selon l'invention dépend de la quantité de composés à neutraliser présents. Par composés à neutraliser, on se réfère surtout aux composés principaux, c'est-à-dire aux SOx et éventuellement aux acides HX.

Selon un mode de réalisation particulier de l'invention, on effectue le traitement des fumées de telle sorte que le rapport stoechiométrique entre le réactif et les composés du type des SOx, et éventuellement les acides de formules HX, soit compris entre 1,02 et 2.

De préférence, ledit rapport stoechiométrique est compris entre 1,02 et 1,5.

Si les fumées à traiter comprennent des polluants organiques ainsi que du mercure, il peut être avantageux d'injecter dans la veine gazeuse un adsorbant, avec le réactif et éventuellement l'eau. L'adsorbant comprenant les polluants organiques peut être ensuite récupéré avec les solides issus du traitement des fumées. L'adsorbant est en général du charbon actif et/ou du coke de lignite.

Il est à noter que si les fumées comprennent des poussières ou des cendres volantes, celles-ci peuvent être récupérées avec les solides produits lors de la neutralisation, ou bien préalablement au traitement selon l'invention, par des méthodes classiques.

La mise en contact desdites fumées avec le réactif, éventuellement l'eau et l'adsorbant, est effectuée de manière connue.

Ainsi, elle peut avoir lieu à co-courant ou à contre-courant.

Le traitement peut de même être effectué dans tout type de réacteur favorisant la dispersion du solide, de la suspension ou de la solution dans des fumées, comme les réacteurs comprenant des systèmes de type Venturi, ou les réacteurs à lit fluidisé.

Si l'on met en oeuvre la seconde variante de la méthode par voie sèche, l'eau peut être apportée avant la mise en contact avec les fumées. Dans ce cas, toutes les méthodes connues conviennent. En général, on met en contact l'eau sous forme pulvérisée et le réactif, dans un tambour humidificateur.

Toujours dans le cadre de cette même variante, on peut apporter l'eau lors de la mise en contact du réactif avec les fumées. Dans ce cas, on injecte alors l'eau dans les quantités requises directement dans la veine gazeuse.

Les solides produits par le procédé sont ensuite séparés en mettant en oeuvre des techniques classiques telles que les électrofiltres, ou les filtres à manche.

Selon un mode de réalisation avantageux de la présente invention, au moins une partie des solides issus du traitement des fumées est recyclée vers une nouvelle étape de traitement des fumées.

La température de traitement des fumées dépend de diverses contraintes technologiques,

Elle dépend notamment de la température des fumées à traiter, de la teneur en eau, de la présence d'un traitement catalytique des NOx, de la résistance thermique des appareillages.

A titre d'indication, la température de traitement des fumées est comprise entre 70 et 500°C et plus particulièrement entre 130 et 400°C.

Dans le cas où l'on effectue un traitement en présence d'eau apportée extemporanément, on peut recycler lesdits solides dans la zone de préparation du mélange réactif/eau.

Si l'eau est mise en contact dans la zone de neutralisation, les solides sont introduits dans cette zone, séparément ou avec, l'introduction de réactif frais. '

Un tel mode de réalisation est intéressant pour augmenter encore l'efficacité du procédé, notamment en cas de temps de séjour court dans la zone de neutralisation. Ce mode permet de même d'abaisser les seuils de purification des fumées.

Les résidus solides collectés sont ensuite mis en contact avec de l'eau ou une solution aqueuse recyclée comprenant du sulfate de sodium.

Le but de cette seconde étape est d'une part de dissoudre de manière sélective les sulfates, le cas échéant les sels halogénés, qui sont le plus souvent dés chlorures. D'autre part, l'objectif de cette étape est de laisser en suspension la majeure partie des métaux considérés comme toxiques.

Une telle opération de dissolution sélective est effectuée en contrôlant le pH du milieu pour se trouver dans une gamme de solubilité minimale des métaux, qui sont notamment sous forme d'hydroxyde et/ou de carbonates.

Il est clair que la gamme dépend de la nature des métaux présents et un compromis entre chacun d'eux peut être nécessaire.

En règle générale, la dissolution est effectuée dans une gamme de pH comprise entre 3 et 10, ces deux bornes étant comprises.

Selon une première variante, et si l'aluminium n'est pas présent en quantité élevée par rapport aux autres métaux, une gamme de pH se situant entre 7 et 10, les deux bornes étant comprises, représente un bon compromis. Plus particulièrement on peut effectuer la dissolution dans une gamme de pH comprise entre 7 et 9, ces deux bornes étant comprises.

Selon une deuxième variante et dans le cas où la quantité d'aluminium est élevée, il peut être souhaitable d'opérer la dissolution à un pH compris entre 3 et 7, ces deux bornes étant comprises.

On ne sortirait pas du cadre de la présente invention en mettant en oeuvre les deux variantes précitées successivement. Ainsi, l'étape de dissolution peut correspondre à deux étapes successives avec une étape de séparation intermédiaire, l'une effectuée à un pH compris entre 7 et 10, la seconde à un pH. compris entre 3 et 7, l'ordre dépendant de la valeur du pH de la solution initiale.

Le contrôle de la valeur du pH est effectué en ajoutant soit un acide, soit une base, choisis de manière à ne pas polluer le mélange. Ainsi, on préfère utiliser de l'acide sulfurique ou du carbonate ou du bicarbonate de sodium.

L'étape dé dissolution sélective des sulfates est effectuée, selon un mode de réalisation particulier de l'invention, à une température comprise entre 15 et 80°C, plus particulièrement entre 20 et 60°C. Un mode de réalisation avantageux consiste à réaliser cette dissolution à une température voisine de 30-40°C.

Après la dissolution et dans le cas ou les fumées traitées contiennent des sulfites ou des bisulfites, on peut effectuer une oxydation de ces espèces en sulfates. Cette opération est en général réalisée en ajoutant au moins un composé oxydant dans le mélange, éventuellement en combinaison avec un chauffage de ce dernier. A titre d'exemple de composés oxydants, on peut citer l'air, le peroxyde d'hydrogène, les persulfates ou encore le sel de l'acide de Caro.

Une fois le sulfate de sodium dissous, on sépare la solution des solides qu'elle contient, par filtration, ou tout autre méthode classique.

Les résidus solides peuvent alors être mis en décharge. On constate qu'à ce stade, la quantité de résidus à mettre en décharge a considérablement diminué par rapport aux procédés classiques de neutralisation à la chaux, et ce, en mettant en oeuvre un procédé simple.

Le filtrat, correspondant à une solution aqueuse de sulfate de sodium purifiée, est par la suite traité de façon à cristalliser ledit sulfate.

Cette opération peut être mise en oeuvre par tout moyen connu de l'homme du métier.

Selon une première variante, on refroidit le filtrat jusqu'à obtenir une différence de température de 15 à 20°C entre les températures de dissolution et de cristallisation.

Dans ce cas, les cristaux obtenus sont sous forme décahydratée.

Selon une seconde variante, on cristallise le sulfate de sodium par évaporation d'au moins une partie de l'eau de la solution.

Les cristaux résultants se trouvent sous forme anhydre.

Le liquide résultant de la cristallisation peut être avantageusement recyclé à l'étape de dissolution des solides issus de l'étape de traitement des fumées.

Avant le recyclage, il peut être intéressant de prélever une partie de ce liquide afin d'éviter l'enrichissement des liquides en métaux considérés comme toxiques, ou éventuellement de traiter ce liquide.

Bien qu'une telle étape ne soit qu'optionnelle, on peut procéder, avant la cristallisation du sulfate de sodium, à une purification supplémentaire de la solution, de manière à éliminer les métaux considérés comme toxiques éventuellement en solution.

Une première méthode consiste à ajouter à la solution au moins un agent précipitant adéquat, choisi notamment parmi les hydroxydes de métaux alcalins, le carbonate de sodium, le carbonate de sodium, ou encore les silicates, ces agents précipitants pouvant être utilisés seuls ou en mélange.

A titre d'agents de ce type, on peut aussi mentionner les produits commercialisés sous la dénomination Profix®, Max Flow®, Low Ash®.

Une seconde méthode, consiste à mettre en contact la solution avec au moins un sulfure minéral, au moins un composé soufré organique, ou leur mélange.

Parmi les sulfures minéraux, on peut mentionner les sulfures d'hydrogène, de sodium, de fer ou encore de baryum.

A titre d'exemple de produits soufrés organiques, on peut citer particulièrement le sel trisodique de la trimer-capto-S-triazine, en solution à 15 % dans l'eau (TMT15®).

Une troisième méthode convenable consiste à mettre en contact la solution avec une résine échangeuse d'ions. Selon cette variante, on met plus particulièrement en oeuvre les résines sous forme hydrogène ou sodium. On préfère pour le second type de résines qui permet une extraction optimale des ions des métaux considérés comme toxiques présents dans la solution.

La pureté de ces cristaux est telle qu'ils peuvent être valorisables directement ou après séchage ou granulation.

Le sulfate de sodium peut notamment être revalorisé dans les fours verriers par exemple.

Des exemples concrets de l'invention vont maintenant être présents.

### Exemple 1:

Les essais de dissolution ont été réalisés à partir de 152,3 g de crasses issues du traitement de fumées de fours verriers avec du bicarbonate de sodium.

On effectue la dissolution à une température d'environ 35°C, en présence de 2,16 litre/kg de crasses.

La solution est ensuite refroidie à 20°C afin de cristalliser le sulfate de sodium.

Le tableau 1 suivant résume le comportement des métaux lors de la dissolution en fonction du pH et de la quantité d'eau ajoutée dans des conditions proches de la saturation.

**Tableau 1**

| **Essai N°** | **1** | **2** | **3** |
|---|---|---|---|
| **pH final** | 3,32 | 9,5 | 7,4 |
| **Na**_{**2**}**CO**_{**3**} **/crasses (mg/g)** | 0 | 6,5 | 2,7 |
| **Fe / SO**_{**4**}^{**2-**} **(ppm)** | **1422** | non détecté | non détecté |
| **Cr (VI) /SO**_{**4**}^{**2-**} **(ppm)** | B,3 | 14 | 4,2 |
| **Al/SO**_{**4**}^{**2-**} **(ppm)** | 3,3 | 6,4 | 2,4 |
| **résidu / crasses (% poids)** | 2,4 | 1,7 | 2,6 |

### Exemple 2 :

Cet essai de dissolution a été réalisé à partir du même solide que celui de l'exemple 1.

On dissout 152,3 g de crasses résultant du traitement de fumées issues de fours verriers avec du bicarbonate de sodium dans 329 ml d'eau pendant une heure en maintenant le pH à 7,13.

La quantité de résidu obtenu est considérablement diminuée puisqu'elle représente 2,9 % en poids des crasses.

La solution obtenue est refroidie à 20°C pendant 5 heures. On obtient des cristaux qui sont ensuite lavés avec une solution saturée de sulfate de sodium.

La teneur en impureté dans le filtrat est de 1,6 mg/l de chrome (VI) et les eaux de lavage en contiennent 0,3 mg/l.

La cristallisation permet d'obtenir des cristaux de sulfate de sodium dont la pureté est indiquée dans le tableau 2 suivant :

**Tableau 2**

| ¹ Métal | pureté sur sulfate solide |
|---|---|
| Al | < 2 ppm |
| Cu | < 4 ppm |
| Cr | <2 ppm |

Cette pureté est très satisfaisante et permet d'envisager une valorisation du sulfate de sodium obtenu. Il peut aussi être séché et éventuellement granulé de manière à obtenir un sulfate de sodium anhydre facilement valorisable.

### Exemple 3 :

On dissout 233,8 g de crasses résultant du traitement de fumées issues de fours verriers avec du bicarbonate de sodium en excès, dans 468 ml d'une solution aqueuse à 160 g/l de sulfate de sodium issue d'une étape de dissolution antérieure. La dissolution est effectuée en une heure en maintenant le pH à 8.

La quantité de résidu obtenu est considérablement diminuée puisqu'elle représente 3 % en poids des crasses initiales.

On met en contact 50 ml de la solution résultante avec 0,3 g (essai 2) et avec 1,36g de TMT15® (essai 3) à une température de 35°C et on laisse évoluer le mélange pendant 5 minutes.

On sépare les précipités puis on analyse les filtrats obtenus. Les résultats sont résumés dans le tableau 3 ci-dessous:

**Tableau 3**

| **essai** | **Cr (mg/l)** | **Cu (mg/l)** | **As (mg/l)** | **Pb (mg/l)** |
|---|---|---|---|---|
| **1** | 7,8 | 3,4 | 0,44 | 34,4 |
| **2** | 4,6 | 0,8 | 0,34 | 1 |
| **3** | 2,4 | 0,8 | 0,3 | 0,6 |

Le filtrat obtenu est refroidi à 20°C pendant 5 heures.

On obtient des cristaux purs qui sont ensuite lavés avec une solution saturée de sulfate de sodium.

### Exemple 4

Dans un réacteur muni de moyen d'agitation, on dissout 550,5 g de crasses issues du traitement de fumées de fours verriers par du bicarbonate de sodium, dans 1,19 litres d'eau, en 1 heure à une température de 35°C.

On maintient un pH de 7 par addition de carbonate de sodium.

On filtre la suspension résultante et l'on obtient un résidu solide, représentant 3,2 % des crasses initiales, que l'on peut mettre en décharge.

Le filtrat est récupéré puis refroidi à 20°C de manière à cristalliser le sulfate de sodium présent.

Les cristaux sont séparés par filtration puis séché. On récupère du sulfate de sodium décahydraté.

La pureté des cristaux est indiquée dans le tableau 4 ci-dessous :

**Tableau 4**

| | |
|---|---|
| **Al** | < 40 ppm |
| **Cu** | <10 ppm |
| **Cr** | < 6 ppm |
| **Fe** | < 4 ppm |
| **Cd** | 6,9 ppm |
| **Zn** | 8,9 ppm |
| **Pb** | 15,8 ppm |

Si un degré de pureté supérieur est souhaité, on peut effectuer une étape supplémentaire de purification de la solution avant la cristallisation.

L'analyse de la composition du filtrat après séparation des cristaux est la suivante :

**Tableau 5**

| | |
|---|---|
| **sulfates** | 125,4 g/l |
| **Al** | < 4 mg/l |
| **Cu** | < 1 mg/l |
| **Cr** | 2,4 mg/l |
| **Fe** | < 0,4 mg/l |
| **Cd** | 0,2 mg/l |
| **Zn** | 2,7 mg/l |
| **Pb** | < 0,1 mg/l |

0,4 litre de ce filtrat est réutilisé pour dissoudre 111,1 g de nouvelles crasses de fours verriers (composition différente des précédentes).

On procède comme précédemment, avec maintient du pH à 7 est maintenu par addition de carbonate de sodium.

La filtration de la suspension résultante conduit à récupérer un solide que l'on peut mettre en décharge, représentant 3,9 % en poids des crasses traitées.

Le filtrat est refroidi à 20°C puis les cristaux de sulfate de sodium décahydraté sont récupérés.

La pureté des cristaux est indiquée dans le tableau 6 ci-dessous:

**Tableau 6**

| | |
|---|---|
| **Al** | < 40 ppm |
| **Cu** | < 10 ppm |
| **Cr** | < 6 ppm |
| **Fe** | < 4 ppm |
| **Cd** | 5 ppm |
| **Zn** | 7 ppm |
| **Pb** | 2 ppm |

Là encore, si un degré de pureté supérieur est souhaité, on peut effectuer une étape supplémentaire de purification de la solution avant la cristallisation.

L'analyse de la composition du filtrat après séparation des cristaux est la suivante:

**Tableau 7**

| | |
|---|---|
| **sulfates** | 129,4 g/l |
| **Al** | < 4 mg/l |
| **Cu** | < 1 mg/l |
| **Cr** | < 0,6 mg/l |
| **Fe** | < 0,4 mg/l |
| **Cd** | < 0,1 mg/l |
| **Zn** | 1 mg/l |
| **Pb** | 0,04 mg/l |

Comme on peut le voir, l'analyse de la composition de ce filtrat est très voisine de celle du filtrat obtenu précédemment. Il n'y a donc pas eu d'enrichissement en métaux.

Par conséquent, il est possible de recycler le filtrat vers de nouvelles étapes de dissolution.

## Revendications

1. Procédé de traitement de fumées comprenant des composés du type des SOx, par voie sèche ou semi-humide, consistant à effectuer les étapes suivantes :
- on traite lesdites fumées avec un réactif comprenant au moins du bicarbonate de sodium, au moins du carbonate de sodium, et au moins de l'ammoniac sous forme de sels d'ammonium ; ledit réactif étant obtenu par un traitement thermique d'un bicarbonate ammoniacal, à une température comprise entre 20 et 150°C, de préférence sous une atmosphère contrôlée comprenant du dioxyde de carbone et/ou de l'eau,
- on dissout sélectivement dans l'eau les sulfates de sodium produits, dans le but de laisser en suspension la majeure partie des métaux considérés comme toxiques,
- on sépare les solides restants en suspension dans la solution,
- on cristallise le sulfate de sodium purifié présent dans la solution précitée.

2. Procédé selon la revendication 1, **caractérisé en ce que** la teneur en bicarbonate de sodium est d'au moins 70 % en poids, de préférence d'au moins 80 % en poids, et plus préférentiellement comprise entre 80 et 95 % en poids, la quantité de carbonate de sodium présent est de moins de 30 % en poids, de préférence de moins de 20%, et plus préférentiellement comprise entre 5 et 15 % en poids, et la teneur en ammoniac, exprimé sous forme d'ion ammonium, est de préférence de moins de 1 % en poids et plus préférentiellement comprise entre 0,2 et 0,7 % en poids.

3. Procédé selon l'une des revendications 1 ou 2, **caractérisé en ce que** le réactif comprend du bicarbonate de sodium, du carbonate de sodium, de l'ammoniac sous forme de sels d'ammonium tels que bicarbonate, carbonate et/ou carbamate, et de l'eau.

4. Procédé selon la revendication 3, **caractérisé en ce que** le réactif comprend moins de 0,1 % en poids de carbamate d'ammonium et de préférence entre 0,01 et 0,06 % en poids, et une quantité en eau de préférence inférieure à 10 % en poids et plus préférentiellement de 1 à 6 % en poids.

5. Procédé selon la revendication 1, **caractérisé en ce que** le bicarbonate ammoniacal comprend 70 à 90 % en poids de bicarbonate de sodium, 2 à 20% en poids de carbonate de sodium, 0,2 à 1,0 % en poids d'ammoniac exprimé sous forme d'ion ammonium, 0,3 à 2,0 % en poids de carbamate d'ammonium, et 5 à 20 % en poids d'eau.

6. Procédé de traitement selon l'une des revendications précédentes, **caractérisé en ce que** l'étape de dissolution sélective des sulfates est effectuée à une température comprise entre 15 et 80°C.

7. Procédé de traitement selon la revendication précédente, **caractérisé en ce que** l'étape de dissolution sélective des sulfates est effectuée dans une gamme de pH se situant entre 3 et 10, les deux bornes étant comprises.

8. Procédé selon la revendication précédente, **caractérisé en ce que** l'étape de dissolution sélective des sulfates est effectuée avec un pH compris entre 7 et 10, les deux bornes étant comprises.

9. Procédé selon la revendication 7, **caractérisé en ce que** l'étape de dissolution sélective des sulfates est effectuée avec un pH compris entre 3 et 7, les deux bornes étant comprises.

10. Procédé selon l'une quelconque des revendications précédentes, **caractérisé en ce que** l'étape de dissolution sélective correspond à deux étapes successives avec une étape de séparation intermédiaire, l'une effectuée à un pH compris entre 7 et 10, la seconde à un pH compris entre 3 et 7, l'ordre dépendant de la valeur du pH de la solution initiale.

11. Procédé de traitement selon l'une quelconque des revendications précédentes, **caractérisé en ce que** l'étape de cristallisation est effectuée en refroidissant le mélange jusqu'à obtenir une différence de température de 15 à 20°C entre les températures de dissolution et de cristallisation.

12. Procédé de traitement selon l'une quelconque des revendications 1 à 11, **caractérisé en ce que** l'étape de cristallisation est effectuée par évaporation d'au moins une partie de l'eau de la solution.

13. Procédé de traitement selon la revendication précédente, **caractérisé en ce que** l'on procède, avant la cristallisation du sulfate de sodium, à une purification supplémentaire de la solution.

14. Procédé de traitement selon la revendication précédente, **caractérisé en ce que** l'on ajoute à la solution au moins un agent précipitant comme les hydroxydes de métaux alcalins, le carbonate de sodium, le bicarbonate de sodium, les silicates, ces agents précipitants étant utilisés seuls ou en mélange.

15. Procédé de traitement selon l'une quelconque des revendications précédentes, **caractérisé en ce que** l'on met en contact la solution avec au moins un sulfure minéral, au moins un composé soufré organique, ou leur mélange.

16. Procédé de traitement selon l'une quelconque des revendications précédentes, **caractérisé en ce que** l'on met en contact la solution avec une résine échangeuse d'ions.

## Claims

1. Method for processing flue gases comprising compounds of the SOx type, by a dry or semi-wet route, this method consisting in carrying out the following steps:
- the said flue gases are treated with a reagent comprising at least sodium bicarbonate, at least sodium carbonate and at least ammonia in the form of ammonium salts; said reagent being obtained by a thermal treatment of an ammoniacal bicarbonate, at a temperature of between 20 and 150°C, preferably under a controlled atmosphere comprising carbon dioxide and/or water,
- the sodium sulphates produced are selectively dissolved in water,
- the solids remaining in suspension in the solution are separated out,
- and the purified sodium sulphate present in the abovementioned solution is crystallized.

2. Method according to Claim 1, **characterized in that** the sodium bicarbonate content is at least 70% by weight, preferably at least 80% by weight and more preferably between 80 and 95% by weight, the amount of sodium carbonate present is less than 30% by weight, preferably less than 20% by weight and more preferably between 5 and 15% by weight, and the ammonia content, expressed in the form of ammonium ion, is preferably less than 1% by weight and more preferably between 0.2 and 0.7% by weight.

3. Method according to either of Claims 1 and 2, **characterized in that** the reagent comprises sodium bicarbonate, sodium carbonate, ammonia in the form of ammonium salts such as bicarbonate, carbonate and/or carbamate, and water.

4. Method according to Claim 3, **characterized in that** the reagent comprises less than 0.1% by weight of ammonium carbamate and preferably between 0.01 and 0.06% by weight, and an amount of water preferably of less than 10% by weight and more preferably from 1 to 6% by weight.

5. Method according to Claim 1, **characterized in that** the ammoniacal bicarbonate comprises 70 to 90% by weight of sodium bicarbonate, 2 to 20% by weight of sodium carbonate, 0.2 to 1.0% by weight of ammonia expressed in the form of ammonium ion, 0.3 to 2.0% by weight of ammonium carbamate, and 5 to 20% by weight of water.

6. Processing method according to one of the preceding claims, **characterized in that** the step of selective dissolution of the sulphates is carried out at temperature of between 15 and 80°C.

7. Processing method according to the preceding claim, **characterized in that** the step of selective dissolution of the sulphates is carried out in a pH range of between 3 and 10, the two limits being included.

8. Method according to the preceding claim, **characterized in that** the step of selective dissolution of the sulphates is carried out with a pH of between 7 and 10, the two limits being included.

9. Method according to Claim 7, **characterized in that** the step of selective dissolution of the sulphates is carried out with a pH of between 3 and 7, the two limits being included.

10. Method according to any one of the preceding claims, **characterized in that** the step of selective dissolution corresponds to two successive steps with an intermediate separating step, one carried out at a pH of between 7 and 10, the second at a pH of between 3 and 7, the order depending on the pH value of the initial solution.

11. Processing method according to any one of the preceding claims, **characterized in that** the crystallization step is carried out by cooling the mixture until a temperature difference of 15 to 20°C between the dissolution temperature and the crystallization temperature is obtained.

12. Processing method according to any one of Claims 1 to 11, **characterized in that** the crystallization step is carried out by evaporation of at least some of the water from the solution.

13. Processing method according to the preceding claim, **characterized in that** an additional purification of the solution is carried out, before crystallization of the sodium sulphate.

14. Processing method according to the preceding claim, **characterized in that** at least one precipitating agent, such as alkali metal hydroxides, sodium carbonate, sodium bicarbonate or silicates, is added to the solution, these precipitating agents being used alone or as a mixture.

15. Processing method according to any one of the preceding claims, **characterized in that** the solution is placed in contact with at least one inorganic sulphide, at least one organosulphur compound or a mixture thereof.

16. Processing method according to any one of the preceding claims, **characterized in that** the solution is placed in contact with an ion-exchange resin.

## Patentansprüche

1. Verfahren zur Behandlung von Rauchgasen, die Verbindungen vom SOₓ-Typ enthalten, auf trockenem oder halbfeuchtem Wege, das darin besteht, die folgenden Schritte zu durchlaufen:
- man behandelt die genannten Rauchgase mit einem Mittel, das mindestens Natriumbicarbonat, mindestens Natriumcarbonat und mindestens Ammoniak in Form von Ammoniumsalzen enthält, wobei das Mittel durch thermische Behandlung eines ammoniakalischen Bicarbonats bei einer Temperatur zwischen 20 und 150 °C erhalten ist, vorzugsweise unter einer kontrollierten Atmosphäre, die Kohlendioxid und/oder Wasser enthält,
- man löst selektiv die erhaltenen Natriumsulfate in Wasser mit dem Ziel, den größten Teil der als toxisch geltenden Metalle in Suspension zu lassen,
- man trennt die in der Lösung als Suspension verbliebenen Feststoffe ab,
- man kristallisiert das in der genannten Lösung vorliegende Natriumsulfat.

2. Verfahren nach Anspruch 1, **dadurch gekennzeichnet, daß** der Gehalt an Natriumbicarbonat mindestens 70 Gew.-%, vorzugsweise mindestens 80 Gew.-%, beträgt und noch spezieller zwischen 80 und 95 Gew.-% liegt, wobei die Menge des vorliegenden Natriumcarbonats weniger als 30 Gew.-%, vorzugsweise weniger als 20 Gew.-%, beträgt und noch spezieller zwischen 5 und 15 Gew.-% liegt und wobei der Gehalt an Ammoniak, definiert als Ammoniumion, vorzugsweise weniger als 1 Gew.-% beträgt und noch spezieller zwischen 0,2 und 0,7 Gew.-% liegt.

3. Verfahren nach Anspruch 1 oder 2, **dadurch gekennzeichnet, daß** das Mittel Natriumbicarbonat, Natriumcarbonat, Ammoniak in Form von Ammoniumsalzen wie Bicarbonat, Carbonat und/oder Carbamat, und Wasser enthält.

4. Verfahren nach Anspruch 3, **dadurch gekennzeichnet, daß** das Mittel weniger als 0,1 Gew.-%, vorzugsweise zwischen 0,01 und 0,06 Gew.-%, Ammoniumcarbamat und eine Wassermenge von vorzugsweise weniger als 10 Gew.-% und noch spezieller zwischen 1 und 6 Gew.-% enthält.

5. Verfahren nach Anspruch 1, **dadurch gekennzeichnet, daß** das ammoniakalische Bicarbonat 70 bis 90 Gew.-% Natriumbicarbonat, 2 bis 20 Gew.-% Natriumcarbonat, 0,2 bis 1,0 Gew.-% Ammoniak, definiert als Ammoniumion, 0,3 bis 2,0 Gew.-% Ammoniumcarbamat und 5 bis 20 Gew.-% Wasser enthält.

6. Behandlungsverfahren nach irgendeinem der vorangehenden Ansprüche, **dadurch gekennzeichnet, daß** der Schritt der selektiven Lösung der Sulfate bei einer Temperatur zwischen 15 und 80 °C durchgeführt wird.

7. Behandlungsverfahren nach dem vorangehenden Anspruch, **dadurch gekennzeichnet, daß** der Schritt der selektiven Lösung der Sulfate in einem pH-Bereich von 3 bis 10, einschließlich der beiden Grenzwerte, durchgeführt wird.

8. Verfahren nach dem vorangehenden Anspruch, **dadurch gekennzeichnet, daß** der Schritt der selektiven Lösung der Sulfate bei einem pH-Wert von 7 bis 10, einschließlich der beiden Grenzwerte, durchgeführt wird.

9. Verfahren nach Anspruch 7, **dadurch gekennzeichnet, daß** der Schritt der selektiven Lösung der Sulfate bei einem pH-Wert von 3 bis 7, einschließlich der beiden Grenzwerte, durchgeführt wird.

10. Verfahren nach irgendeinem der vorangehenden Ansprüche, **dadurch gekennzeichnet, daß** der Schritt der selektiven Lösung zwei aufeinanderfolgenden Schritten mit einem dazwischenliegenden Trennungsschritt entspricht, wobei einer bei einem pH-Wert zwischen 7 und 10 und der zweite bei einem pH-Wert zwischen 3 und 7 durchgeführt wird, wobei die Reihenfolge vom pH-Wert der Ausgangslösung abhängt.

11. Behandlungsverfahren nach irgendeinem der vorangehenden Ansprüche, **dadurch gekennzeichnet, daß** der Kristallisationsschritt durchgeführt wird, indem das Gemisch solange abgekühlt wird, bis eine Temperaturdifferenz von 15 bis 20 °C zwischen den Lösungs- und den Kristallisationstemperaturen erreicht ist.

12. Behandlungsverfahren nach irgendeinem der Ansprüche 1 bis 11, **dadurch gekennzeichnet, daß** der Kristallisationsschritt durch Verdunstung mindestens eines Teils des Wassers der Lösung durchgeführt wird.

13. Behandlungsverfahren nach dem vorangehenden Anspruch, **dadurch gekennzeichnet, daß** man vor der Kristallisation des Natriumsulfats eine zusätzliche Reinigung der Lösung durchführt.

14. Behandlungsverfahren nach dem vorangehenden Anspruch, **dadurch gekennzeichnet, daß** man zur Lösung mindestens ein Fällungsmittel, wie Hydroxyde der Alkalimetalle, Natriumcarbonat, Natriumbicarbonat oder Silikate, hinzugibt, wobei diese Fällungsmittel einzeln oder als Gemisch verwendet werden.

15. Behandlungsverfahren nach irgendeinem der vorangehenden Ansprüche, **dadurch gekennzeichnet, daß** man die Lösung mit mindestens einem mineralischen Sulfid, mindestens einer organischen Schwefelverbindung oder Gemischen davon zusammenbringt.

16. Behandlungsverfahren nach irgendeinem der vorangehenden Ansprüche, **dadurch gekennzeichnet, daß** man die Lösung mit einem Ionenaustauscherharz zusammenbringt.
